# EUROPEAN PATENT APPLICATION

(11) **EP 1 149 524 A1**
(43) Date of publication of application: **31.10.2001**
(21) Application number: 01200632.6
(22) Date of filing: 19.02.2001
(51) Int. Cl.: A01C 15/00

(54) **A hopper**

(30) Priority: 27.03.2000 NL 1014757
(71) Applicant: Lely Enterprises AG, 6300 ZUG (CH)
(72) Inventor: van Noordt, Alouysius Johannes Apolonius, 3155 GM Maasland (NL)
(74) Representative: Corten, Maurice Jean F.M.

(57) **Abstract**

The invention relates to a hopper (1), in particular for storing granular and/or pulverulent material, such as e.g. fertilizer or sowing seed, said hopper (1) being provided with a filling aperture (10) that is capable of being closed with the aid of closing means (2), which closing means (2) for opening and closing the filling aperture (10) are at least partially movable relative to the hopper (1) with the aid of a pivoting mechanism (3). The hopper (1) is further provided with guide means (5, 8) for guiding at least part of the closing means (2) during their movement.

## Description

The invention relates to a hopper, as described in the preamble of claim 1. Such a hopper is known. Particularly with agricultural implements, such as e.g. a fertilizer spreader or a sowing machine, it is sometimes painstaking to loosen and swing aside the cover means, which are usually constituted by a cover sheet, in order to create a sufficiently large opening through which the hopper can be filled.

The invention aims at providing a hopper with cover means as described above, in which it is possible to remove the closing means in a simple and quick manner, in order to create a sufficiently large opening for filling the hopper.

In accordance with the invention this is achieved by the measures as described in the characterizing part of claim 1. Under the influence of the guide means the closing means are moved in such a manner that there is created a sufficiently large filling aperture. According to a further inventive feature, the guide means are rotatably fitted to the hopper. More in particular the guide means are fitted to the inner and/or the outer side of the hopper. In a preferred embodiment of the invention the guide means comprise a bracket. According to again another inventive feature, the bracket comprises at least one guide element which, in the opened position of the closing means, forms a boundary between the filling aperture of the hopper, released by the closing means, and the closing means which have been pivoted away. According to another inventive feature, the guide elements are made from a flexible material, such as e.g. leaf spring strips and/or synthetic strips. According to a further aspect of the invention, the hopper comprises a stop against which the guide means are located when the closing means have been pivoted into the opened position. According to another inventive feature, the guide means are located against the stop under the influence of gravitational force or under the influence of spring action. According to a further inventive feature, seen in the direction of movement of the closing means, at least the majority of the guide means are located, during opening of the closing means, behind an imaginary axis about which the pivotable closing means are rotated. According to another inventive feature, the guide means are connected to the closing means. According to an inventive feature, the closing means comprise a cover sheet.

The invention will now be explained in further detail with reference to the accompanying figures in which:
Figure 1 is a plan view of a hopper which is provided with a cover sheet;
Figure 2 is a cross-section of the hopper according to the arrows II-II in Figure 1;
Figure 3 is a further cross-section of the hopper according to the lines III-III in Figure 2, and
Figure 4 shows a part of the hopper, in a situation in which the cover sheet has been swung aside and is located behind the guide means.

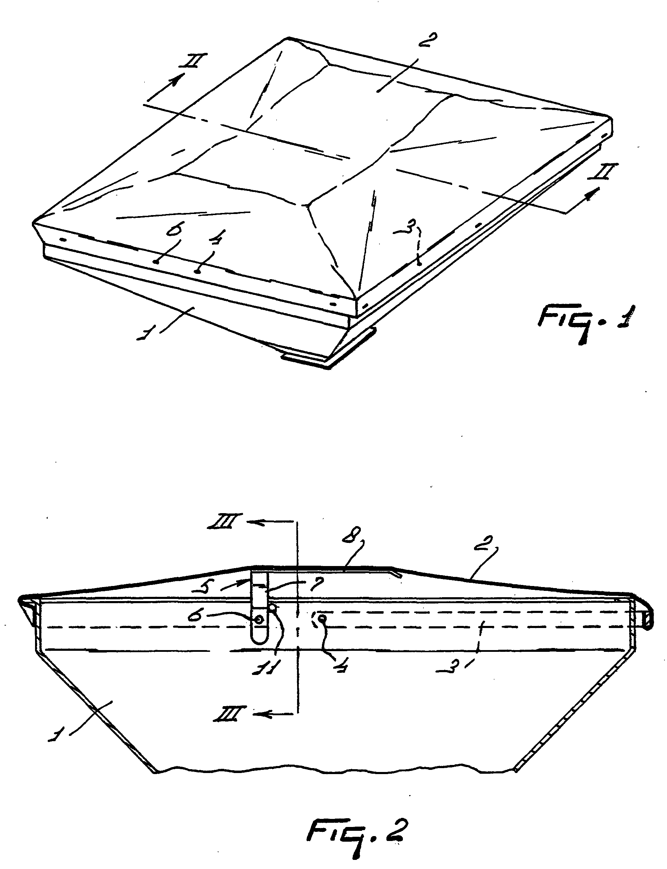

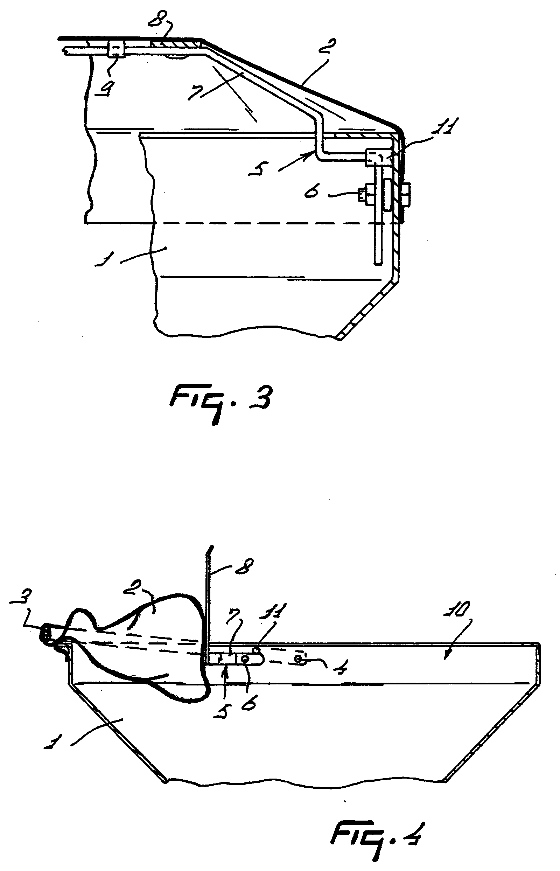

Figure 1 is a plan view of a hopper 1 which is provided with closing means 2 which are designed as a cover sheet in the present embodiment. As shown in Figure 2, the closing means 2 are provided with a pivoting mechanism which, in the present embodiment, is designed as a first bracket 3 that is pivotably connected to the hopper 1 about horizontal axes 4. As shown in Figure 2, the cover sheet 2 is connected to the first bracket 3. In the hopper 1 there are further disposed guide means 5 for the closing means 2. The guide means 5 comprise a second bracket 7 that is pivotable about horizontal axes 6. The second bracket 7 is further provided with two guide elements 8 which are designed as spring steel strips in the present embodiment. As shown in Figures 2 and 3, the closing means 2 bear on the second bracket 7 and the guide elements 8 when the hopper 1 is closed. As shown in Figure 3, the second bracket 7 is connected to the closing means 2 with the aid of loops 9. As shown in Figure 4, a filling aperture 10 in the hopper 1 can be released by pivoting away the first bracket. As a result of the first bracket 3 having been pivoted away, the second bracket 7 is pivoted too and so are the guide elements 8 that form a boundary for the closing means 2. When the filling aperture 10 has been released, the second bracket 7 is located against a stop 11. The filling aperture 10 can be closed again by pivoting back the first bracket 3.

## Claims

1. A hopper (1), in particular for storing granular and/or pulverulent material, such as e.g. fertilizer or sowing seed, said hopper (1) being provided with a filling aperture (10) that is capable of being closed with the aid of closing means (2), which closing means (2) for opening and closing the filling aperture (10) are at least partially movable relative to the hopper (1) with the aid of a pivoting mechanism (3), **characterized in that** the hopper (1) is further provided with guide means (5, 8) for guiding at least part of the closing means (2) during their movement.

2. A hopper as claimed in claim 1, **characterized in that** the guide means (5, 8) are also suitable for positioning at least part of the closing means when the filling aperture is opened.

3. A hopper as claimed in claim 1 or 2, **characterized in that** the guide means (5, 8) are rotatably fitted to the hopper (1).

4. A hopper as claimed in any one of claims 1 to 3, **characterized in that** the guide means (5, 8) are fitted to the inner side of the hopper (1).

5. A hopper as claimed in any one of claims 1 to 3, **characterized in that** the guide means (5, 8) are fitted to the outer side of the hopper (1).

6. A hopper as claimed in any one of claims 1 to 5, **characterized in that** the guide means (5) comprise a bracket (7).

7. A hopper as claimed in any one of the preceding claims, **characterized in that** the bracket (7) comprises at least one guide element (8) which, in the opened position of the closing means (2), forms a boundary between the filling aperture (10) of the hopper (1), released by the closing means (2), and the closing means themselves.

8. A hopper as claimed in claim 5, **characterized in that** the guide elements (8) are made from a flexible material, such as e.g. leaf spring strips and/or synthetic strips.

9. A hopper as claimed in any one of the preceding claims, **characterized in that** the hopper (1) comprises a stop (11) against which the guide means (5) are located when the closing means (2) have been pivoted into the opened position.

10. A hopper as claimed in claim 9, **characterized in that** the guide means (5) are located against the stop (11) under the influence of gravitational force or under the influence of spring action.

11. A hopper as claimed in any one of the preceding claims, **characterized in that**, seen in the direction of movement of the closing means (2), at least the majority of the guide means (5) are located, during opening of the filling aperture, behind an imaginary axis about which the pivotable closing means (2) are rotated.

12. A hopper as claimed in any one of claims 1 to 11, **characterized in that** the guide means (5) are connected to the closing means (2).

13. A hopper as claimed in claim 9, **characterized in that** the closing means (2) comprise a cover sheet.
